# EUROPEAN PATENT APPLICATION

(11) **EP 1 958 505 A1**
(43) Date of publication of application: **20.08.2008**
(21) Application number: 07250662.9
(22) Date of filing: 16.02.2007
(51) Int. Cl.: A01K 97/06

(54) **Case structure for housing fishing hook**

(71) Applicant: Jang, Hong Sun, Dongjak-gu, Seoul (KR)
(72) Inventor: Jang, Hong Sun, Dongjak-gu, Seoul (KR)
(74) Representative: Thomson, Neil David

(57) **Abstract**

The present invention relates to a case structure for housing a fishing hook which can keep the fishing hook safe and convenient. The case structure for housing a fishing hook (300) includes: a case body (10) having a first fishing hook-receiving groove (116) formed therein, the first fishing hook-receiving groove having a vertical wall formed downwardly by a predetermined depth at the inside thereof and a second fishing hook-receiving groove (114) formed having inclined side walls (114a,114b) extending upwardly wideningly from the first fishing hook-receiving groove in such a manner as to communicate with the first fishing hook-receiving groove; a cover (112) having a predetermined area corresponding to the second fishing hook-receiving groove of the case body for opening/closing the case body; and a pair of locking protrusions (120a,120b) formed upwardly protrudingly to a predetermined height from the inclined side walls of the second fishing hook-receiving groove of the case body for holding the fishing hook thereto.

## Description

### BACKGROUND OF THE INVENTION

### Field of the Invention

The present invention relates to a case structure for housing a fishing hook, and more particularly, to a case structure for housing a fishing hook which can keep the fishing hook safe and make use of the fishing hook conveniently by improving a fishing hook-receiving chamber formed at the inside thereof.

### Background of the Related Art

As well known in the art, fishing is largely divided into two types according to kinds of fishing rods: one being reel fishing having a reel for winding a fishing line to throw the fishing hook further away than the fishing rod, and the other being pole-and-line fishing for catching fishes by directly tying a line on the fishing rod without the reel.

In the typical reel and pole-and-line fishing, when the fishing is finished, the fishing rod is folded and put into a fishing rod case typically made of cloth or synthetic vinyl. Then, the fishing line connected to the upper end portion of the fishing rod is wound reciprocating between line hanger buttons located away from the fishing rod case.

After the fishing line has been wound entirely, only the fishing hook connected to the tippet of the fishing line remains. At this time, typically, the fishing hook is fixedly put into the fishing rod case. However, it is difficult to take out the fishing hook again after the fishing hook has been put into the fishing rod case.

For example, in case of the fishing hook having barbs, it is very difficult to take out the fishing hook if the end portion of the hook is caught beyond the barb portion. If the fishing hook is forcedly deviated from the fishing rod case, it may be damaged.

Also, if the fishing hook is put lightly to prevent the above problem, the fishing hook comes out of the fishing rod case while a user is moving together with the fishing rod case, and hence, the user may get pricked with the fishing hook.

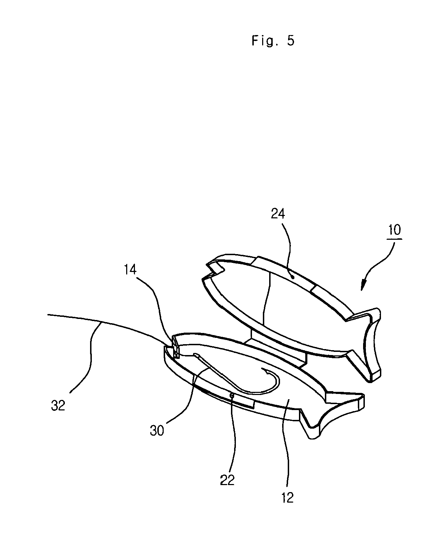

To solve these problems, there has been disclosed a conventional case structure for housing fishing hook as shown in FIG.5.

FIG.5 is a perspective view showing the conventional case structure for housing a fishing hook.

As shown in FIG. 5, the conventional case structure for housing a fishing hook includes a case body 10 having a fishing hook-receiving part 12 for receiving and holding a fishing hook 30 therein. The case body 10 has an insertion slot 14 formed at one side thereof for inserting a fishing line 32 thereinto and has a locking protrusion 22 and a locking groove 24 formed on the coupled faces of the case body 10 for opening and closing the case body 10.

However, the conventional case structure for housing the fishing hook just holds the fishing hook 30 in the fishing hook-receiving part 12 for preventing the fishing hook 30 from being exposed to the outside. Thus, while a user moves to fish or if an external force is applied to the case structure, the fishing hook 30 is severely fluctuated in the fishing hook-receiving part 12 and is collided with an inner wall of the case structure, which causes the end portion of the fishing hook 30 to become undesirably dull.

### SUMMARY OF THE INVENTION

Accordingly, the present invention has been made in view of the above-mentioned problems occurring in the prior art, and it is an object of the present invention to provide a case structure for housing a fishing hook which can keep the fishing hook safe and convenient.

To accomplish the above object, according to the present invention, there is provided a case structure for housing a fishing hook, including: a case body having a first fishing hook-receiving groove formed therein, the first fishing hook-receiving groove having a vertical wall formed downwardly by a predetermined depth at the inside thereof and a second fishing hook-receiving groove formed having inclined side walls extending upwardly wideningly from the first fishing hook-receiving groove in such a manner as to communicate with the first fishing hook-receiving groove; a cover having a predetermined area corresponding to the second fishing hook-receiving groove of the case body for opening/closing the case body; and a pair of locking protrusions formed upwardly protrudingly to a predetermined height from the inclined side walls of the second fishing hook-receiving groove of the case body for holding the fishing hook thereto.

Preferably, the case body further includes a loop formed at one side thereof.

Preferably, the case body and the cover have a locking means formed on the facing portions therebetween for locking/unlocking the cover to/from the case body.

Preferably, the case body is coated with a luminous material or a fluorescent material.

Preferably, the case body further includes a handgrip mounted on the outer surface of the first fishing hook-receiving groove thereof.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG.1 is a perspective view showing a case structure for housing a fishing hook according to the present invention;

FIG.2 is a sectional view taken along the line of I-I of FIG.1;

FIG.3 is a perspective view showing the case structure for housing a fishing hook according to the present invention wherein a cover is opened;

FIG.4 is a perspective view showing a use example of the case structure for housing a fishing hook according to the present invention; and

FIG.5 is a perspective view showing a conventional case structure for housing a fishing hook.

### DETAILED DESCRIPTION OF THE PREFERRED EMBODIMENT

Hereinafter, an explanation of a case structure for housing a fishing hook according to the present invention will be given with reference to the attached drawings.

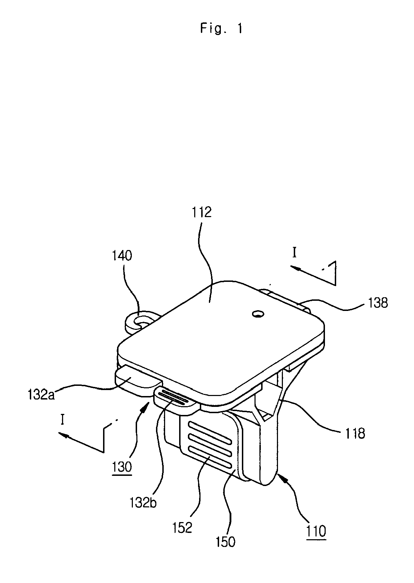

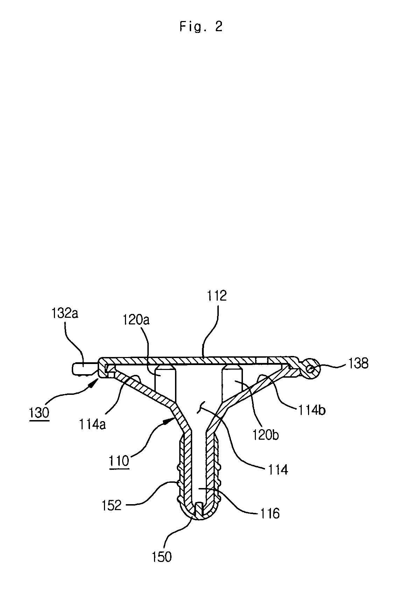

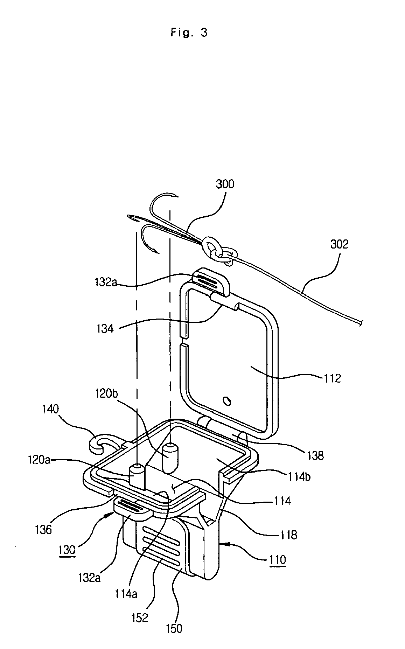

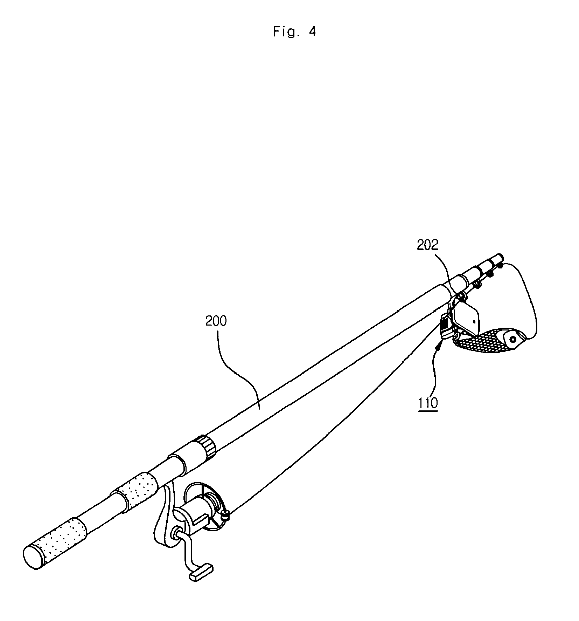

FIG. 1 is a perspective view showing a case structure for housing a fishing hook according to the present invention, FIG.2 is a sectional view taken along the line of I-I of FIG.1, FIG.3 is a perspective view showing the case structure for housing a fishing hook according to the present invention wherein a cover is opened, and FIG.4 is a perspective view showing a use example of the case structure for housing a fishing hook according to the present invention.

As shown in the drawings, a case structure for housing a fishing hook according to the present invention is made for housing a fishing hook 300 with three barbs formed integrally thereto and has a case body 110 having a fishing hook-receiving chamber formed therein for receiving and holding the fishing hook 300 therein.

The fishing hook-receiving chamber is comprised of a first fishing hook-receiving groove 116 formed having a vertical wall formed downwardly by a predetermined depth at the inside of the case body 110 and a second fishing hook-receiving groove 114 formed having inclined side walls 114a and 114b extending upwardly wideningly from the first fishing hook-receiving groove 116 in such a manner as to communicate with the first fishing hook-receiving groove 116.

Further, the case structure of the present invention includes a cover 112 having a predetermined area corresponding to the second fishing hook-receiving groove 114 of the case body 110 for opening/closing the case body 110.

The cover 112 and the case body 110 are openably coupled together by means of a hinge 138, and at the opposite side of the hinge 138 is provided a locking means 130 for locking and unlocking the cover 112 to/from the case body 110.

The locking means 130 includes a pair of opening/closing pieces 132a and 132b formed corresponding to each other on the case body 110 and the cover 112 and further a locking protrusion 134 and a locking groove 136 formed on the faces of the cover 112 and the case body 110 corresponding to the opening/closing pieces 132a and 132b, such that when the locking protrusion 134 is inserted into the locking groove 136, the cover 112 is locked to the case body 110.

The formation of the pair of opening/closing pieces 132a and 132b makes the opening and closing of the case body 110 and the cover 112 convenient.

As shown, the case structure for housing a fishing hook further includes a pair of protrusions 120a and 120b. The pair of protrusions 120a and 120b are formed protruded upwardly to a predetermined height from the inclined side walls 114a and 114b of the second fishing hook-receiving groove 114 of the case body 110 for holding the barbs of the fishing hook 300 retained in the second fishing hook-receiving groove 114 thereto. That is to say, two of the three barbs of fishing hook 300 are held to the pair of locking protrusions 120a and 120b.

As shown, the case structure of the present invention includes an opening 118 formed at any one side of the case body 110 for passing the fishing line 302 tied on the fishing hook 300 retained in the fishing hook-receiving chamber therethrough.

As shown, the case body 110 further includes a loop 140 formed at one side thereof. The loop 140 serves to fix the case body 110 to the fishing rod, and as shown in FIG.4, it is locked to any one of a plurality of support rings 202 mounted on a fishing rod 200 to support the fishing line.

Further, the case body 110 is coated with a luminous material or a fluorescent material or is coated with the mixture of the luminous and fluorescent materials. This makes the case body 110 observed with ease in the night or day time, thereby giving many conveniences in use.

As shown, the case structure for housing the fishing hook according to the present invention further includes a handgrip 150 for allowing the case body 110 to be taken by a user's hand with ease. The handgrip 150 is desirably mounted on the outer surface of the first fishing hook-receiving groove 116 of the case body 110.

The formation of the handgrip 150 makes the case body 110 taken with ease by a user's hand, such that it is convenient to put and take the fishing hook 300 in/out the case body 110.

Also, the handgrip 150 desirably has an irregular surface part 152 thereon for preventing slipping when the case body 110 is taken by a user's hand for putting and taking the fishing hook 300 in/from the case body 110.

So as to house the fishing hook 300 in the case body 110 of the case structure of the present invention as constructed above, the cover 112 is first opened such that the fishing hook-receiving chamber is opened. At this state, the fishing hook 300 having three barbs is housed and kept safe in the fishing hook-receiving chamber. That is to say, one of the three barbs of the fishing hook 300 is inserted into the first fishing hook-receiving groove 116, and the others are caught to the pair of locking protrusions 120a and 120b of the second fishing hook-receiving groove 114.

After the fishing hook 300 is housed, the cover 112 is locked to the case body 110, thereby finishing housing the fishing hook 300 in the case body 110.

Next, the case structure of the present invention is fixedly locked to the support ring 202 mounted on the fishing rod 200 as shown in FIG.4 by using the loop 140 formed at any one side of the case body 110. In this case, the case structure of the present invention can prevent the fishing line 302 from being tangled.

As apparent from the foregoing, the case structure for housing the fishing hook according to the present invention can keep the fishing hook stably without any movement and extend the lifetime of the fishing hook. Moreover, the present invention can prevent entanglement of the fishing line because the fishing hook case is firmly fixed to the fishing rod case.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A case structure for housing a fishing hook comprising:
a case body having a first fishing hook-receiving groove formed therein, the first fishing hook-receiving groove having a vertical wall formed downwardly by a predetermined depth at the inside thereof and a second fishing hook-receiving groove formed having inclined side walls extending upwardly wideningly from the first fishing hook-receiving groove in such a manner as to communicate with the first fishing hook-receiving groove;
a cover having a predetermined area corresponding to the second fishing hook-receiving groove of the case body for opening/closing the case body; and
a pair of locking protrusions formed upwardly protrudingly to a predetermined height from the inclined side walls of the second fishing hook-receiving groove of the case body for holding the fishing hook thereto.

2. The case structure according to claim 1, wherein the case body further comprises a loop formed at one side thereof.

3. The case structure according to claim 1, wherein the case body and the cover have a locking means formed on the facing portions therebetween for locking/unlocking the cover to/from the case body.

4. The case structure according to claim 1, wherein the case body is coated with a luminous material or a fluorescent material.

5. The case structure according to claim 1, wherein the case body further comprises a handgrip formed on the outer surface of the first fishing hook-receiving groove thereof.
